# EUROPEAN PATENT APPLICATION

(11) **EP 1 947 758 A2**
(43) Date of publication of application: **23.07.2008**
(21) Application number: 08000853.5
(22) Date of filing: 17.01.2008
(51) Int. Cl.: H02K 15/02

(54) **Method of manufacturing rotor of electric motor and electric motor**

(30) Priority: 19.01.2007 JP 2007010441
(71) Applicant: FANUC LTD, Minamitsuru-gun, Yamanashi 401-0597 (JP)
(72) Inventor: Okamoto, Takashi, Yamanashi 401-0597 (JP); Furuya, Tsuyoshi, Yamanashi 401-0597 (JP)
(74) Representative: Thum, Bernhard

(57) **Abstract**

A method of manufacturing a rotor of an electric motor, the rotor including a laminated core of multilayer structure formed from electromagnetic thin plates laminated in an axial direction of a rotational shaft, and a pair of end plates disposed on opposite sides in the axial direction of the laminated core, and the rotor being rotatably disposed in an inside of a stator, the method including: fitting the rotational shaft into an insertion hole formed in a center region of the end plates having elasticity in a direction of plate thickness; positioning the end plates at specified position on the rotational shaft; and abutting either one of the end plates in elastically deformed state to at least one end of the laminated core.

## Description

### Background of the Invention

### 1. Field of the Invention

The present invention is applicable to, for example, a machine tool, a robot, a press machine, an injection molding machine, and the like, and relates to a method of manufacturing a rotor that is disposed rotatably within a stator of an electric motor, and to the electric motor.

### 2. Description of Related Art

Generally, an inner rotor type electric motor in which a rotor of an electric motor is disposed within a stator, and in which the rotor has a rotational shaft, a laminated core having a multi-layer structure of thin plates for electromagnetic interaction formed around the rotational shaft and laminated in the axial direction, and a pair of end plates disposed on both axial ends of the laminated core with the rotational shaft inserted through an insertion hole formed in a center region of the rotor, has been known.

An electric motor disclosed in Japanese Patent Publication No. H09-233750 A1 has an inner rotor which has a permanent magnet having an axial dimension greater than an axial dimension of a laminated core,' wherein at least one of a pair of end plates disposed on both end portions of the laminated core, is pressed so as to permit elastic deformation against an end of the permanent magnet projecting out of an end face of the laminated core. The pair of end plates are connected via a length member for interconnection by means of rivets as fastening means so as to sandwich the laminated core from opposite sides. In this way, on at least one side of the permanent magnet, occurrence of a gap between the permanent magnet and the end plate can be avoided so that displacement in one direction during rotation of the rotor may be controlled.

An electric motor is also disclosed in Japanese Patent Publication No. 2003-102151 A1, in which end plates are fixed such that a protrusion formed on one end plate is abutted to an end portion of a permanent magnet that has been fitted into a hole of a laminated core by shrinkage fitting. The pair of end plates are fixed to the laminated core by means of screws on respective sides of the laminated core.

However, with conventional electric motors, however, there is a problem that, since a pair of end plates are fixed by fastening means such as screw and rivets, an increasing number of parts are required, which in turn necessitates more time consuming work for assembling a pair of end plates, and leads to an increase in the production cost.

Further, in conventional electric motors, although an end plate can be brought into contact with an end portion of a permanent magnet, the end plate may become in non-contact with an end face (end face of thin plates) of a laminated core and may give rise to a gap between them. If there is such a gap, when an inner rotor is inserted into a stator at the time of assembling of an electric motor, the outer circumferential surface of the rotor may be brought into sliding contact with the inner circumferential surface of the stator, and may lead to separation (delamination) of individual thin plates in the multi-layer structure. In particular, in a large electric motor of high output power that is used in a machine tool or the like, there is a problem that mechanical strength of the laminated core may be degraded due to this delamination of individual thin plates in the laminated core.

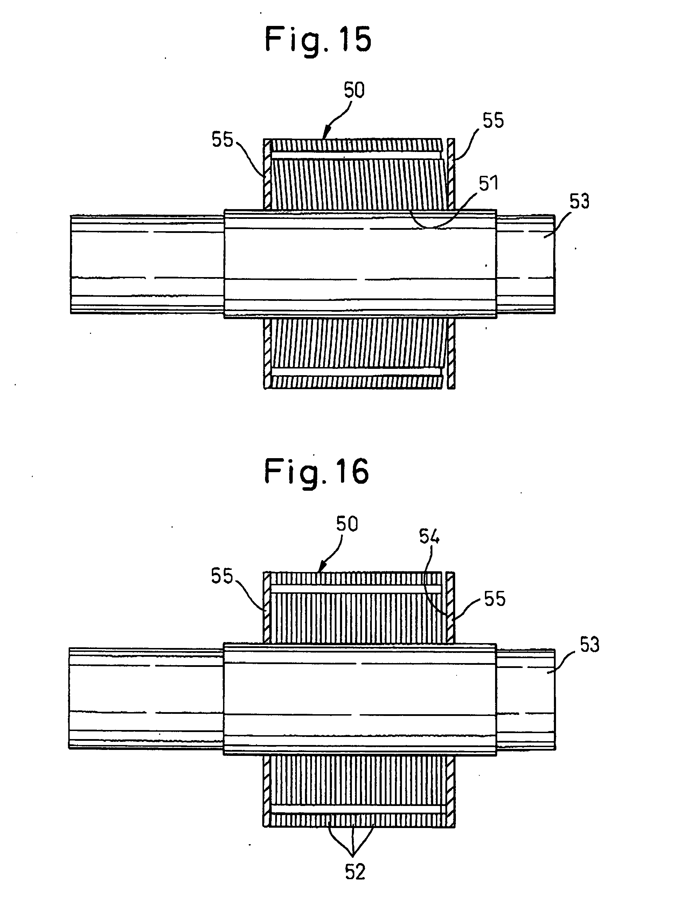

It has become clear that the problem of a gap being produced between the end plate 55 and the end face of a laminated core 50 may be aggravated by the warping of the laminated core 50, as shown in Fig. 15, that is produced when a rotational shaft 53 is pressed into a through-hole formed in the center region of the lamionated core 50, or by a gap 54 that is produced, as shown in Fig. 16, by accumulation of error in thickness of individual thin plates 52 of the laminated core.

### Summary of the Invention

It is an object of the present invention to provide a method of manufacturing a rotor of an electric motor and an electric motor that permits end plates to be easily fitted to opposite sides of a laminated core and that is capable of reliably protecting the laminated core by the fitted end plates, and improving reliability of the production quality of an rotor of an electric motor.

In order to attain the above object, in accordance with one aspect of the present invention, there is provided a method of manufacturing a rotor of an electric motor which has a laminated core of multi-layer structure with electromagnetic thin plates laminated in an axial direction of a rotational shaft, and a pair of end plates disposed on both axial ends of the laminated core, and the rotor being rotatably disposed in an inside of a stator, characterized in that the method has the steps of fitting the rotational shaft into an insertion hole formed in a center region of the end plate having elasticity in a direction of plate thickness, positioning the end plate at a predetermined position on the rotational shaft, and abutting either one of the end plate to at least one end of the laminated core in an elastically deformed state.

In accordance with another aspect of the present invention, there is provided an electric motor comprising a stator and a rotor of an electric motor disposed in a inside of the stator, the rotor including a laminated core of multi-layer structure formed from electromagnetic thin plates laminated in an axial direction of a rotational shaft, and a pair of end plates disposed on opposite sides of the laminated core, characterized in that the end plates have elasticity in a direction of plate thickness, and either one of the end plates is abutted to at least one end portion of the laminated core with the elastic force.

In accordance with the method of manufacturing a rotor of an electric motor according to the present invention, by fitting the end plates to the rotational shaft, positioning the end plates at a predetermined position on the rotational shaft, and abutting either one of the end plates to at least one end portion of the laminated core in the elastically deformed state, the end portion of the laminated core and the end plate can be held in the abutted state by the elastic restoring force of the end plate. Therefore, the end plates can be easily attached and the attached end plates can be, used to reliably protect the laminated core to thereby improve the production quality of the rotor of an electric motor.

In accordance with an electric motor according to the present invention, since the end plates having elasticity in the direction of plate thickness are abutted to at least one end of the laminated core by the elastic force of the end plates, contact of the end plates with the end of the laminated core can be maintained even if there is warping of the laminated core or non-uniformity in the plate thickness of the laminated core. Thus, separation (delamination) of individual thin plates forming the laminated core can be prevented. Therefore, the end plates disposed on opposite sides of the laminated core can be easily fixed so that reliability of the production quality of the electric motor after attachment of the end plates may be improved.

### Brief Description of the Drawings

Above and other objects, features, and advantages of the present invention will become more apparent from the following description of preferred embodiments with reference to appended drawings, in which:
Fig. 1 is a sectional view of an electric motor according to an embodiment of the present invention;
Fig. 2A is a view before shrinkage fitting the end plates, in a method of fitting a pair of end plates to both ends of the laminated core of the electric motor shown in Fig. 1 by shrinkage fitting and press fitting;
Fig. 2B is a view after shrinkage fitting, in a method of fitting a pair of end plates to both ends of the laminated core of the electric motor shown in Fig. 1 by shrinkage fitting and press fitting;
Fig. 2C is a view of press fitting the end plates, in a method of fitting a pair of end plates to both ends of the laminated core of the electric motor shown in Fig. 1 by shrinkage fitting and press fitting ;
Fig. 3A is a view before shrinkage fitting, in the second method of fitting a pair of end plates in which a pair of end plates is press fitted to both ends of the laminated core of the electric motor shown in Fig. 1;
Fig. 3B is a view before press fitting, in the second method of fitting a pair of end plates in which a pair of end plates is press fitted to both ends of the laminated core of the electric motor shown in Fig. 1;
Fig. 3C is a view of press fitting the end plates, in the second method of fitting a pair of end plates in which a pair of end plates is press fitted to both ends of the laminated core of the electric motor shown in Fig. 1;;
Fig. 4A is a view before shrinkage fitting, in the third method of fitting a pair of end plates in which a pair of end plates is threadedly fitted to both ends of the laminated core of the electric motor shown in Fig. 1;
Fig. 4B is a view of threadedly fitting the end plates to the rotational shaft, in the third method of fitting a pair of end plates in which a pair of end plates is threadedly fitted to both ends of the laminated core of the electric motor shown in Fig. 1;
Fig. 4C is a view after threadedly fitting, in the third method of fitting a pair of end plates in which a pair of end plates is threadedly fitted to both ends of the laminated core of the electric motor shown in Fig. 1; ;
Fig. 5A is a side view of an end plate according to a first embodiment used in the electric motor shown in Fig. 1;
Fig. 5B is a front elevation view of an end plate according to a first embodiment used in the electric motor shown in Fig. 1;
Fig. 6A is a side view of an end plate according to a second embodiment used in the electric motor shown in Fig. 1;
Fig. 6B is a front elevation view of an end plate according to a second embodiment used in the electric motor shown in Fig. 1;
Fig. 7A is a side view of an end plate according to a third embodiment used in the electric motor shown in Fig. 1;
Fig. 7B is a front elevation view of an end plate according to a third embodiment used in the electric motor shown in Fig. 1;
Fig. 8A is a side view of an end plate according to a fourth embodiment used in the electric motor shown in Fig. 1;
Fig. 8B is a front elevation view of an end plate according to a fourth embodiment used in the electric motor shown in Fig. 1;
Fig. 9A is a side view of an end plate according to a fifth embodiment used in the electric motor shown in Fig. 1;
Fig. 9B is a front elevation view of an end plate according to a fifth embodiment used in the electric motor shown in Fig. 1;
Fig. 10A is a side view of an end plate according to a sixth embodiment used in the electric motor shown in Fig. 1;
Fig. 10B is a front elevation view of an end plate according to a sixth embodiment used in the electric motor shown in Fig. 1;
Fig. 11 is an enlarged view of the part A in Fig. 5;
Fig. 12A is a side view of an end plate according to a seventh embodiment used in the electric motor shown in Fig. 1;
Fig. 12B is a front elevation view of an end plate according to a seventh embodiment used in the electric motor shown in Fig. 1;
Fig. 13A is a view before fixing the endplates and the rotational shaft, in an example of another method of fitting a pair of end plates to both ends of the laminated core of the electric motor shown in Fig. 1 by means of a jig;
Fig. 13B is a view after fixing the endplates and the rotational shaft, in an example of another method of fitting a pair of end plates to both ends of the laminated core of the electric motor shown in Fig. 1 by means of a jig;
Fig. 13C is an exploded view of the jig, in an example of another method of fitting a pair of end plates to both ends of the laminated core of the electric motor shown in Fig. 1 by means of a jig;
Fig. 14 is a view showing an example of a dishshaped end plate fitted to one end of the laminated core;
Fig. 15 is a sectional view showing an example of a conventional rotor; and
Fig. 16 is a sectional view showing another example of a conventional rotor.

### Detailed Description

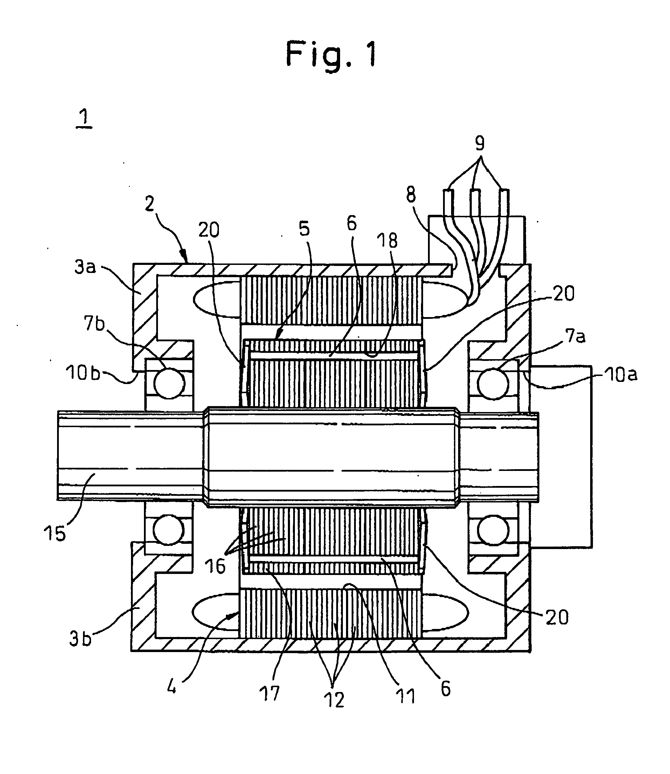

The present invention will be described in detail below with reference to drawings showing specific examples of embodiments of the present invention. Fig. 1 is a view of an electric motor according to an embodiment of the present invention. An electric motor 1 of this embodiment has an housing 2 in a shape of a circular cylinder, an outer stator 4 provided in the shape of a ring along the inner circumferential surface of housing 2, an inner rotor (rotor of an electric motor) 5 rotatably disposed in the inside of outer stator 4, a multiplicity of magnets 6 embedded at equal interval in the circumferential direction of inner rotor 5, and a pair of bearings 7a, 7b that axially support a rotational shaft 15 of rotor 5 on both left and right sides.

Housing 2 is formed of non-magnetic material such as aluminium, and is a halved structure consisting of an upper housing 3a and a lower housing 3b. The pair of upper and lower housings 3a, 3b are adapted to be assembled into one integral unit after inner rotor 5 is disposed in the inside of outer stator 4. Three leads 9 extend from an opening 8 of upper housing 3a for supplying AC power to outer stator 4. On left and right opening ends 10a, 10b of housing 2, there are positioned bearings 7a, 7b, respectively, for rotatably supporting rotational shaft 15 of inner rotor 5.

Outer stator 4 has a multi-layer structure formed as lamination of a multiplicity of thin plates 12 which have been formed by punching of an electromagnetic steel sheet such as a silicon steel sheet in the shape of annular ring by using a press machine. In the center region of outer stator 4, a through-hole 11 is formed in order to insert inner rotor 5. On the inner circumferential portion of through-hole 11, a multiplicity of grooves are formed in order to wind an electromagnetic coil (not shown). Outer stator 4 has plural cooling holes (not shown) disposed in the circumferential direction, and holes for passing tie rods (not shown) for interconnecting individual thin plates. The cooling holes are passageways for cooling medium penetratingly formed in the axial direction of stator 4, and are adapted to cool stator 4 by directing a cooling medium such as air, oil, or the like through the cooling holes.

Inner rotor 5 has rotational shaft 15, a laminated core 17 of multi layer structure formed by laminating electromagnetic thin plates 16 in the axial direction around rotational shaft 15, and a pair of end plates 20, 20 having an insertion hole 21 in the center region and disposed on opposite sides of the axial direction of laminated core 17 with rotational shaft 15 inserted through insertion hole 21. Like outer stator 4 having a multi layer structure, laminated core 17 is also formed by laminating a multiplicity of thin plates 16 which have been formed by punching of an electromagnetic steel sheet of magnetic material such as a silicon steel sheet by using a press machine, and has a cylindrical shape. Individual thin plates 16 may be interconnected with tie rods (not shown) provided so as to penetrate in the axial direction through laminated core 17, or may be interconnected in one unit by press bonding by means of a press machine.

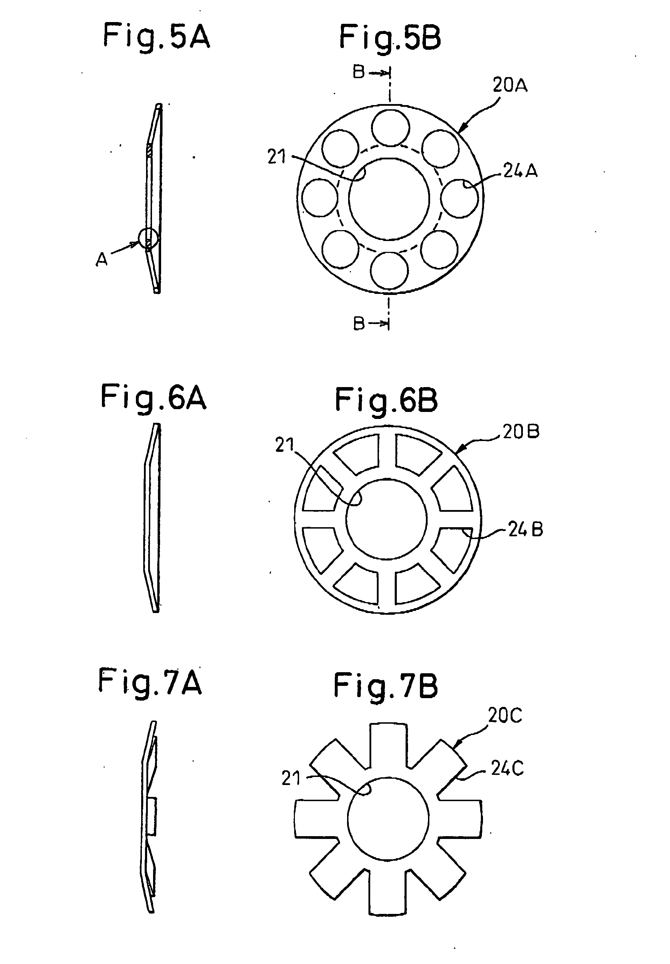

The pair of end plates 20, 20 are formed from non-magnetic material such as aluminium, and as shown in various shapes in Figs. 5-12, have a diameter comparable to the diameter of laminated core 17. Thus, end plate 20 is of a size covering the multiplicity of magnets 6 embedded in laminated core 17, and is formed as a single monolithic plate. The pair of end plates 20, 20 are adapted to protect both end portions of laminated core 17 with end plate 20 fixed so as not to give rise to a gap between the end plate and the respective end of laminated core 17. Although a thick end plate can be abutted tightly to the end of laminated core 17 and is effective for preventing deformation of laminated core 17, it tends to increase the production cost as well as the moment of inertia. Therefore, end plate 20 is formed so as to have a suitable thickness with due consideration for the rigidity of end plate 20.

Since end plates 20 are of a sufficient size to cover the multiplicity of magnets 6, the multiplicity of magnets 6 embedded in holes 18 of laminated core 17 by pressing or adhesive bonding are prevented from jumping out or being displaced from holes 18 at the time of rotation of the rotor, and inner rotor 5 can be kept rotating in good balance. As various variants of end plate 20 are described later, end plate 20 is formed in the shape of a dish such that it has elasticity in the direction of plate thickness. End plate 20 having such elasticity will be described in detail below.

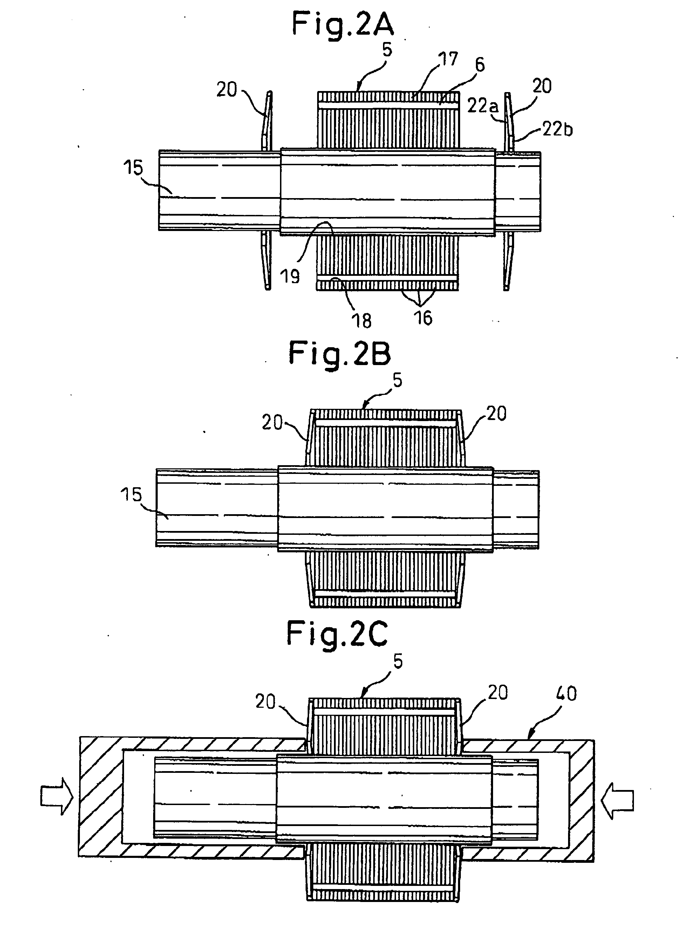

Next, a method of manufacturing an electric motor according to the present invention will be described. Figs. 2A-2C are views useful for explaining a first method of fitting a pair of end plates 20, 20 to both ends of laminated core 17 by shrinkage fitting and press fitting. The pair of end plates 20, 20, for example, end plates 20A-20E as shown in Figs. 5-9 may be used. As shown in Fig. 2A, each of a pair of end plates 20, 20 in the shape of dish is positioned with facing concave surface 22a to the end of laminated core 17 at a position separated from the end of laminated core 17, and then, as shown in Fig. 2B, the pair of end plates 20, 20 are heated to a predetermined temperature for shrinkage fitting onto rotational shaft 15. After shrinkage fitting, as shown in Fig. 2C, the pair of end plates 20, 20 are pressed on convex surface 22b from opposite sides of the axial direction by a press machine 40 so as to be moved along rotational shaft 15 and to bring concave surfaces 22a of end plates 20 into contact with both ends of laminated core 17. In this manner, individual dishshaped end plate 20 that is deformed elastically can exert its elastic restoring force to the end of laminated core 17 as an axial pressing force. Therefore, no gap is formed between the pair of end plates 20, 20 and both ends of laminated core 17, and laminated core 17 can be sandwiched and held between pair of endplates 20, 20. Since the elastic restoring force tends to be greater in the outer peripheral portion than in the inner peripheral portion, laminated core 17 is pressed by end plate 20 with stronger force on the outer peripheral portion than in the inner peripheral portion. Therefore, when the electric motor is assembled, separation or plastic deformation of thin plates 16 on the outer circumferential side of laminated core 17 at the time of insertion of inner rotor 5 into outer stator 4 can be effectively prevented.

Inner rotor 5 assembled as described above is inserted into the inside of outer stator 4 with rotational shaft 15 rotatably supported on both sides by a pair of bearings 7a, 7b in the halved structure of a pair of upper and lower housings 3a, 3b, as has been done conventionally. Outer circumferential surface of inner rotor 5 and the inner circumferential surface of outer stator 4 are disposed in opposition to each other via a constant gap. When an alternating voltage of arbitrary frequency is applied to the coil of outer stator 4, inner rotor 5 having magnets embedded therein begins to be rotated. Electric motor 1 assembled in this manner is shown in Fig. 1.

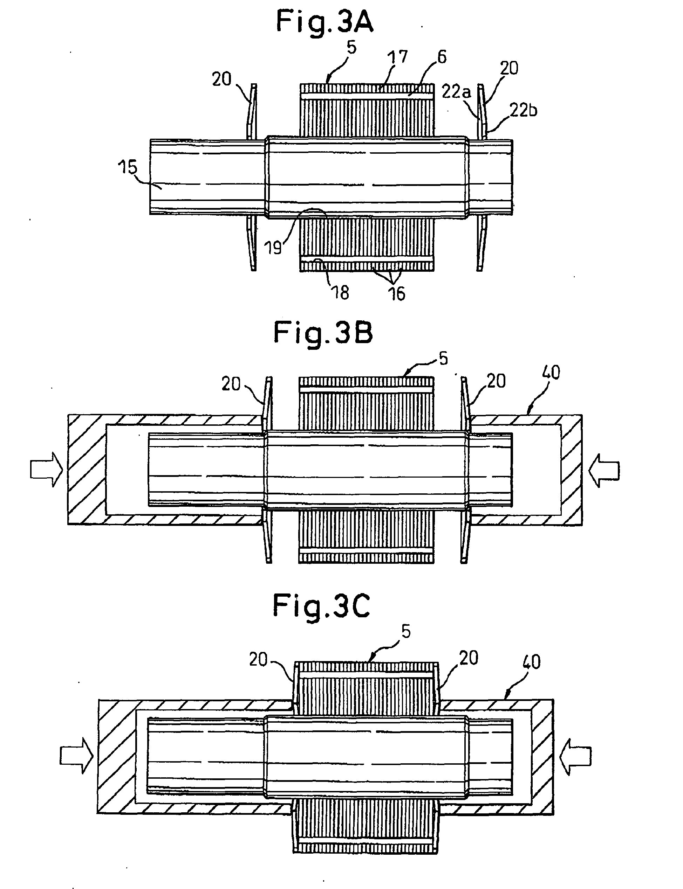

Figs. 3A-3C are views explaining a second method of fitting a pair of end plates 20, 20 to both ends of laminated core 17 by press fitting only. As in the first fitting method, a pair of end plates 20, 20, for example, end plates 20A-20E as shown in Figs. 5-9 may be used. As shown in Fig. 3A, each of a pair of end plates 20, 20 in the shape of dish is positioned with facing concave surface 22a toward the end of laminated core 17 such that the pair of end plates 20, 20 are disposed at a position separated from the respective ends of laminated core 17. Then, as shown in Fig. 3B, the pair of end plates 20, 20 are pressed from both axial sides by using a press machine 40 onto rotational shaft 15, and as shown in Fig. 3C, concave surfaces 22a of the pair of end plates 20, 20 are brought into contact with both ends of laminated core 17. Both ends of laminated core 17 are each thereby subjected to the pressing force of respective end plate 20, so that laminated core 17 is sandwiched and held between the pair of end plates 20, 20. Thus, as in the first fitting method, in assembling electric motor 1, separation of thin plates 16 on the outer circumferential side of laminated core 17 can be effectively prevented. Since the method of manufacturing the electric motor after assembling of inner rotor 5 is same as before, duplicate explanation thereof will be omitted.

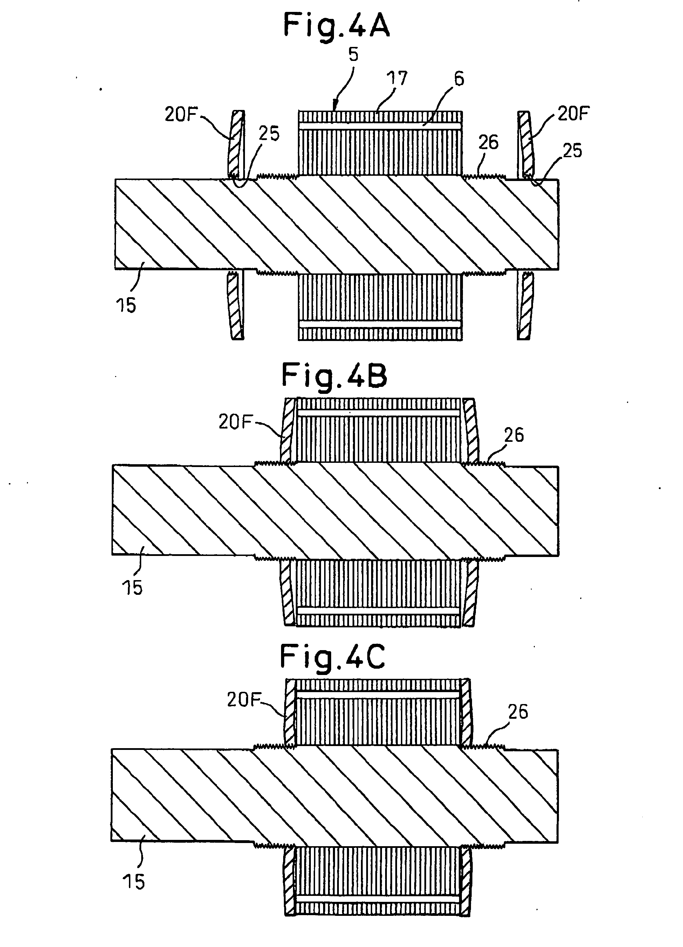

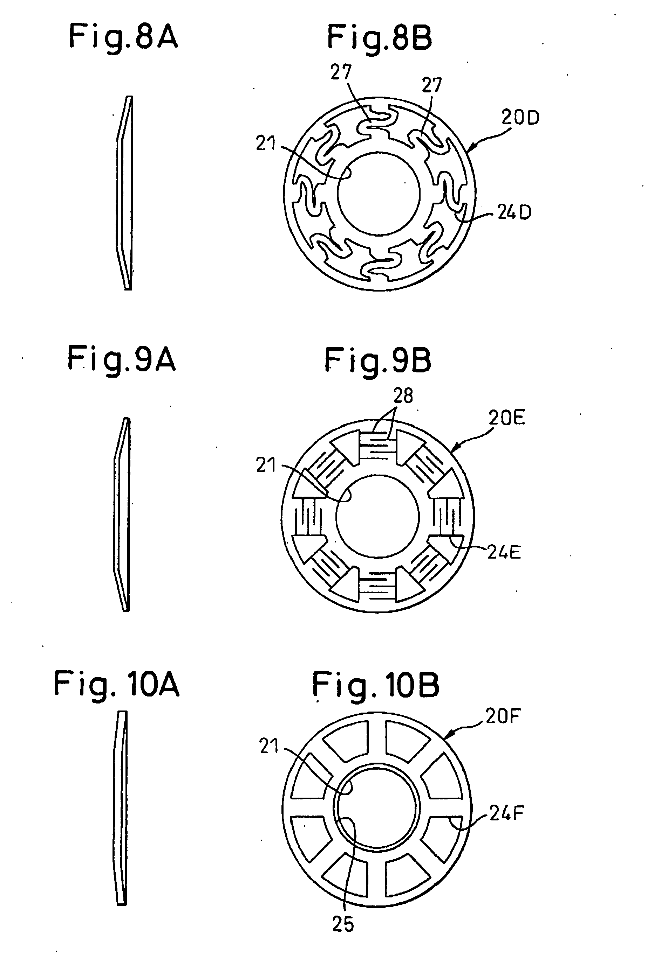

Figs, 4A-4C are views explaining a third method of fitting a pair of end plates 20, 20 to both ends of laminated core 17 by threaded fitting. For the pair of end plates 20F, 20F, for example, an end plate shown in Fig. 10 which has internal thread 25 formed on inner circumferential surface 23 of end plate 20F can be used. The rotational shaft 15 having external thread 26 formed in the region to be threadedly engaged with internal thread 25 of end plate 20F is suitable for use. In this fitting method, a pair of end plates 20F, 20F are positioned at a distance separated from the ends of laminated core 17, as shown in Fig. 4A, and then, as shown in Fig. 4B and Fig.4C, internal thread 25 of end plate 20F can be threaddly engaged with external thread 26 of rotational shaft 15 to bring the pair of end plates 20F, 20F into elastic contact with both ends of laminated core 17. Since the method of manufacturing the electric motor after assembling of inner rotor 5 is the same as before, duplicate explanation thereof will be omitted.

Next, end plates 20A-20F used in the first to the third fitting methods will be described with reference to Figs. 5-10. In Figs. 5-10, end plates 20A-20F.have common features in that each is formed in the shape of a dish, has a diameter comparable to the diameter of laminated core 17, and is formed from non-magnetic material. Since end plates 20A-20F are each formed in the shape of a dish, end plates 20A-20F are capable of deforming in the direction of plate thickness when subjected to an external force. Since end plates 20A-20F are of a diameter comparable to the diameter of laminated core 17, the multiplicity of magnets 6 embedded in laminated core 17 are covered by end plates 20A-20F. Since end plates 20A-20F are formed from non-magnetic material, the decrease of torque of the electric motor 1 (deterioration of the characteristics) due to leakage of magnetic flux from magnets 6 can be avoided.

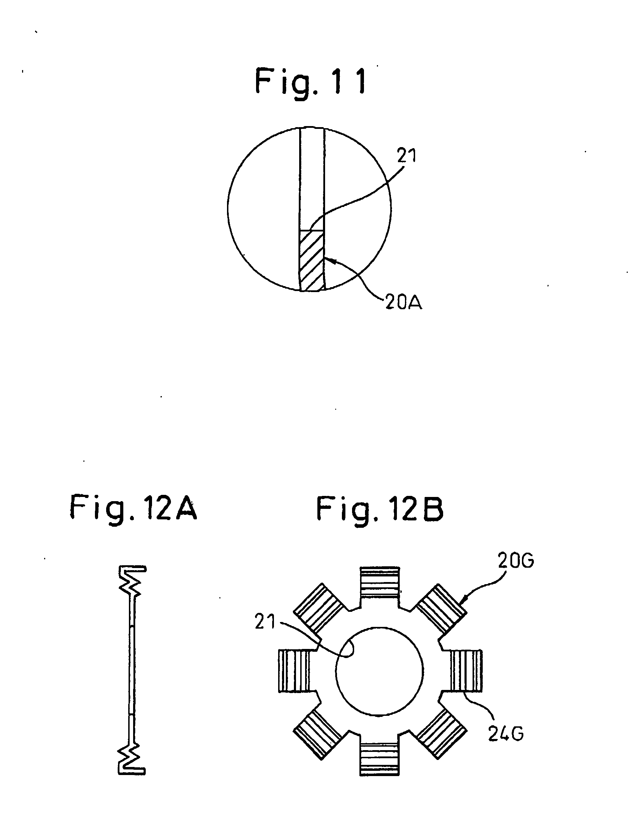

End plates 20A-20E shown in Figs. 5-9 used in the first and the second fitting methods have an insertion hole 21 formed in the center region for pressing-in rotational shaft 15. Inner surface 23 of the hole is formed, as shown in Fig. 11, in parallel to the direction of the pressing-in of rotational shaft 15. Thus, end plates 20A-20E can come into surface contact at inner surface 23 of the hole with the outer circumferential surface of rotational shaft 15 so that end plates 20A-20E may be reliably fixed to rotational shaft 15.

End plates 20A-20E shown in Figs. 5-9 have respective openings 24A-24E formed in the annular plate for reduction of the moment of inertia. Openings 24A-24E are formed at equal interval in the circumferential direction so as not to impair the rotational balance of rotor 5. Openings 24A shown in Fig. 5 are formed in the shape of circle, and openings 24B, 24E shown in Figs. 6 and 9 are formed in the shape of rectangle. In Fig. 7, openings 24C are formed in the shape of grooves. In Fig. 8, the annular plate is designed to have elasticity in the direction of the plate surface, and openings 24D are formed between links 27 formed at equal interval in the circumferential direction. In Fig. 9, a multiplicity of slits 28 extending in the circumferential direction are alternatingly formed between adjoining openings 24E.

End plate 20F in Fig. 10 which is used in the third fitting method, has an internal thread 25 formed on the inner surface of hole 23 formed in the center region to be threadedly engaged with an external thread 26 formed on the outer circumferential surface of rotor 15. In this method, similar operative effect as in the first and the second fitting methods can be obtained when end plate 20F and rotational shaft 15 are threadedly engaged with each other. Openings 24F are formed in the shape of rectangle in the annular plate, and are otherwise similar to Fig. 6.

As has been described above, in accordance with the method of manufacturing a rotor according to the present embodiment, elastic restoring force of end plates 20, 20A-20F can be utilized to hold end plates 20, 20A-20F in abutment to the ends of laminated core 17 without using fastening means such as screws and rivets. Therefore, end plates 20, 20A - 20F can be easily fitted and laminated core 17 can be reliably protected by fitted end plates 20, 20A-20F. In electric motor 1 according to the present embodiment, since end plates 20, 20A-20F abut to at least one of the ends of laminated core 17 with elastic force of end plates 20, 20A-20F, contact of end plates 20, 20A-20F with the end of laminated core 17 can be maintained even if there is a warp in laminated core 17 or there is non-uniformity in plate thickness of laminated core 17, so that separation of individual thin plates composing laminated core 17 can be prevented. Therefore, reliability of the product quality of electric motor 1 after the end plates are fitted can be improved.

The present invention is by no means limited to above-described embodiments, but can be carried out in various modifications. For example, although various variants of the end plate are shown in Figs, 5-10, it is also possible, as shown in Fig. 12, to use spring force to fix end plate 20 to the corner of the end of laminated core 17.

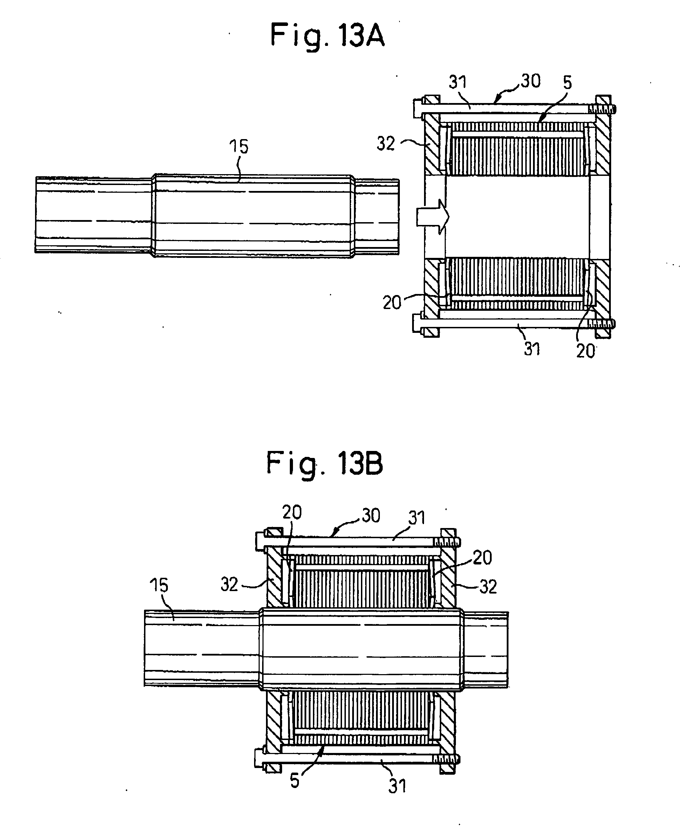

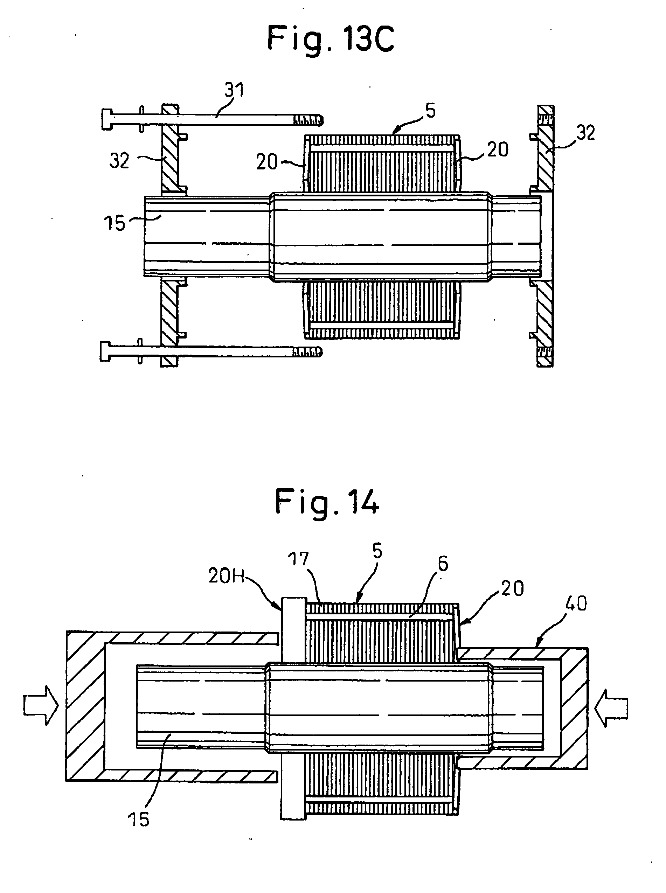

Although, in the method of fitting end plate 2o as shown in Figs. 2 and 3, a press machine 40 is used to press-in a pair of end plates 20, 20 onto rotational shaft 15, it is also possible to use a jig 30 as shown in Fig. 13 to fit end plate 20. In this fitting method, jig 30 having a pair of plate members 32, 32 interconnected by bolt 31 can be used to hold a pair of end plates 20, 20 and laminated core 17 axially in one unit, and while the entire unit is being heated, rotational shaft 15 is shrinkage fitted into insertion hole 19 of laminated core 17, and after specified time has elapsed and the unit has been cooled, jig 30 is disassembled and removed from end plates 20, 20 and laminated core 17 to fit end plates 20, 20 onto rotational shaft 15.

It is also possible, as shown in Fig. 14, to use a thick flat plate 20H as one of the end plates and a dishshaped end plate 20 according to the present invention as the other of the end plates. In this case, too, the first to the third fitting method can be used for fitting end plate 20.

## Claims

1. A method of manufacturing a rotor (5) of an electric motor, said rotor (5) including a laminated core (17) of multi-layer structure formed from electromagnetic thin plates (16) laminated in an axial direction of a rotational shaft (15), and a pair of end plates (20, 20a-20G) disposed on opposite sides in an axial direction of said laminated core (17), and said rotor (4) being rotatably disposed in an inside of a stator (4),
**characterized in that** said method comprises:
fitting said rotational shaft (15) into an insertion hole (21) formed in a center region of said end plates (20, 20a-20G) having elasticity in a direction of plate thickness of said end plates (20, 20a-20G);
positioning said end plates (20, 20a-20G) at specified position on said rotational shaft (15); and
abutting either one of said end plates (20, 20a-20G) in an elastically deformed state to at least one end of said laminated core (17).

2. A method of manufacturing a rotor (5) of an electric motor as claimed in claim 1,
**characterized in that** initial shape of said end plates (20, 20a-20G) before elastic deformation is dish-shape, and that a concave surface side of the end plates (20, 20a-20G) is abutted to said end of said laminated core (17).

3. A method of manufacturing a rotor (5) of an electric motor as claimed in claim 1 or 2,
**characterized in that** said end plates (20, 20a-20G) and said end are held in an abutted state by pressing-in said end plates (20, 20a-20G) to said rotational shaft (15).

4. An electric motor comprising a stator (4) and a rotor (5) of an electric motor disposed in an inside of said stator (4), said rotor (5) comprising:
a laminated core (17) of multi-layer structure formed from electromagnetic thin plates (16) laminated in an axial direction of a rotational shaft (15), and a pair of end plates (20, 20a-20G) disposed on opposite sides in an axial direction of said laminated core (17);
**characterized in that** said end plates (20, 20a-20G) have elasticity in a direction of plate thickness of said end plates (20, 20a-20G), and either one of said end plates (20, 20a-20G) is abutted to at least one end of said laminated core (17) with elastic force.

5. An electric motor as claimed in claim 4,
**characterized in that** initial shape of said end plates (20, 20a-20G) before elastic deformation is dish-shape, and that a concave surface side of the end plates (20, 20a-20G) is abutted to said end of said laminated core(17).

6. An electric motor as claimed in claim 4 or 5,
**characterized in that** said end plates (20, 20a-20G) are pressed-in to said rotational shaft (15).

7. An electric motor as claimed in claim 4 or 5,
**characterized in that** a multiplicity of magnets which are parallel to said rotational shaft (15) and disposed at equal interval in the circumferential direction of said rotational shaft (15) are embedded in said laminated core (17), and that said end plates (20, 20a-20G) consist of a single monolithic plates of a sufficient size to cover said multiplicity of magnets (6).

8. An electric motor as claimed in claim 4 or 5,
**characterized in that** an external thread (26) is formed on an outer circumferential surface of said rotational shaft (15), and that an internal thread to be threadedly engaged with said external thread (26) is formed on an inner circumferential surface of said insertion hole (21) of said end plates (20, 20a-20G).

9. An electric motor as claimed in claim 4 or 5,
**characterized in that** said end plates (20, 20a-20G) are formed from non-magnetic material.

10. An electric motor as claimed in claim 4 or 5,
**characterized in that** a multiplicity of openings are formed at rotationally symmetric positions on a portion of the plate surface of said end plates (20, 20a-20G).
